# FASCICULE DE BREVET EUROPEEN

(11) **EP 2 659 772 B1**
(45) Date de publication et mention de la délivrance du brevet: **15.04.2020**
(21) Numéro de dépôt: 13165752.0
(22) Date de dépôt: 29.04.2013
(51) Int. Cl.: A01K 1/00, A01K 1/02

(54) **Dispositif de case pour animaux**
Hüttenvorrichtung für Tiere
Animal box device

(30) Priorité: 03.05.2012 FR 1254047
(43) Date de publication de la demande: 06.11.2013
(73) Titulaire: Jourdain S.A., 45300 Escrennes (FR)
(72) Inventeur: Brisson, Christian, 49800 Trélazé (FR); Jourdain, Dominique, 45300 Escrennes (FR)
(74) Mandataire: Cabinet Beau de Loménie

(56) Documents cités:
- AU-A1- 2008 201 751
- DE-A1- 4 427 174
- DE-U1- 20 109 073
- FR-A1- 2 916 846
- US-A1- 2005 115 512
- US-A1- 2009 272 330

## Description

La présente invention concerne un dispositif de case pour animaux, tel qu'une case à veaux, comprenant un plancher, des parois latérales opposées, une paroi de fond et un portillon avant, lesdites parois et ledit portillon s'étendant vers le haut à partir du plancher.

Les animaux d'élevage peuvent séjourner dans ce type de cases pendant leur élevage. Classiquement, les cases sont montées dans des zones d'élevage telles que des hangars. En général, le plancher est ajouré de manière à se présenter comme un caillebotis. Si une partie des déjections de l'animal peut traverser les ouvertures de ce caillebotis, une autre partie reste retenue sur la surface supérieure. De plus, d'autres produits, tels que du fourrage ou des aliments, peuvent s'amonceler sur le plancher et traverser ce dernier en partie. Il importe donc de pouvoir nettoyer relativement aisément la case et, en particulier, le plancher.

Pour les dispositifs connus à plancher fixe, ce nettoyage n'est pas aisé. En effet, même avec un jet d'eau à haute pression, on ne peut pas éliminer aisément les déchets et salissures accumulés sur le plancher, que ce soit en les évacuant latéralement ou en les faisant traverser le plancher si celui-ci est un caillebotis. De plus, la surface du sol située sous le plancher est difficilement atteinte par le jet.

Dans certains dispositifs, le plancher se présente comme une palette en bois ou en matériau synthétique, qui repose sur le sol. Pour nettoyer ce plancher, il faut le soulever et le dégager complètement du dispositif de case. De plus, pendant le nettoyage, il faut pouvoir stocker le plancher à proximité du dispositif de case.

Il existe aussi des systèmes dans lesquels les parois du dispositif de case peuvent être basculées comme un tout par rapport à un axe horizontal, alors que le plancher reste en place. Ceci permet de dégager des détritus présents sur le plancher, mais uniquement une fois que les parois ont été basculées. Le plancher peut de plus être lui-même basculé pour nettoyer la partie du sol qui se trouve sous lui. Ces dispositifs nécessitent des manipulations relativement lourdes et des dégagements importants pour pouvoir recevoir les parois de la case en position basculée avant de basculer le plancher à son tour.

Il existe encore des dispositifs dans lesquels le plancher est formé par des dalles reposant sur un cadre. Ces dalles peuvent être séparées de ce cadre, moyennant des manipulations assez laborieuses et, comme pour le dispositif précité, il est nécessaire de disposer d'un espace de stockage pour ces dalles pendant le nettoyage de la case et du sol qui se trouvait sous le plancher.

Le document AU 2008 201 751 divulgue une cage pour animaux dont le plancher peut être rabattu contre l'une des parois pour permettre le pliage de la cage. Cette structure n'est pas adaptée à une case à veaux, ce document évoquant plutôt l'utilisation de la cage pour isoler provisoirement de petits animaux tels que des chiens pour éviter qu'ils ne se battent ou ne s'accouplent. Le plancher est articulé par des charnières classiques et n'est pas aisément démontable. Son nettoyage n'est pas non plus aisé.

Le document US2009/0272330 divulgue une case à animaux selon le préambule de la revendication 1. Le document FR2916846 divulgue une installation pèse-bétail dont le plancher comprend au moins un module formant volet articulé.

L'invention vise à remédier à ces inconvénients, en proposant un dispositif permettant un nettoyage plus aisé, en particulier un nettoyage plus aisé du plancher et du sol situé sous le plancher, tout en permettant un assemblage aisé du plancher avec les autres éléments de la case à veaux.

Ce but est atteint grâce au dispositif défini par la revendication 1.

Ainsi, le portillon du dispositif de case étant ouvert, il est possible de nettoyer la surface supérieure du plancher en évacuant par le portillon les produits et salissures qui reposaient sur ce plancher, avant de basculer ce dernier contre la face interne de l'une des parois qui s'étendent vers le haut, pour nettoyer la face inférieure du plancher et la surface de sol qui était recouverte par le plancher avant son basculement. Aucun espace de stockage n'est nécessaire, puisque le plancher occupe un espace minimal en étant rabattu à l'intérieur de la case.

Le plancher peut être ainsi assemblé de manière très simple avec la paroi sur laquelle il est articulé. En cas de nécessité, il peut être démonté par simple extraction des moyens formant broche d'assemblage en dehors du canal d'assemblage.

Avantageusement, le bord inférieur de la paroi par rapport à laquelle le plancher est articulé présente, sur au moins l'une de ses faces, au moins un fourreau en relief formant un tronçon de perçage apte à être inséré dans une encoche du côté du plancher dans laquelle débouche un tronçon de perçage dudit plancher.

Le canal d'assemblage est ainsi formé par la continuité du fourreau en relief et du tronçon de perçage du plancher. Le fourreau étant en saillie sur la paroi (du côté interne de cette dernière), l'axe de pivotement du plancher par rapport à la paroi est déporté latéralement par rapport à la face intérieure de cette paroi, de telle sorte que le plancher peut basculer sur un débattement angulaire légèrement supérieur à 90°, afin que son extrémité libre déplace l'aplomb de l'articulation et que le plancher repose naturellement sur la face interne de la paroi par rapport à laquelle il bascule par gravité.

Avantageusement, le dispositif comporte des moyens pour maintenir le plancher rabattu contre la paroi sur laquelle il est monté pivotant.

Dans ce cas, avantageusement, l'un des éléments constitués par le plancher et par la paroi sur laquelle le plancher est monté pivotant porte un verrou escamotable dans un logement, ledit verrou étant apte à être dégagé de son logement tout en étant retenu par rapport audit élément qui le porte, pour coopérer avec l'autre desdits éléments lorsque le plancher est rabattu contre la paroi.

Ces moyens permettent de garantir un maintien total du plancher en position pivotée. Le verrou étant escamotable, il ne constitue pas, à l'état libre, non verrouillé, une pièce saillante susceptible de gêner ou de blesser les animaux.

Avantageusement, les deux bords du plancher parallèles à l'axe de pivotement dudit plancher sont analogues.

Ceci permet, au choix, de faire basculer le plancher par rapport à l'un ou l'autre de ses bords.

Avantageusement, le plancher est relié par son premier côté latéral à la première paroi latérale de manière à pouvoir pivoter d'un seul tenant par rapport à elle.

On pourrait prévoir un plancher en deux parties basculant chacune par rapport à l'une des parois latérales du dispositif. Toutefois, le fait d'utiliser un plancher en une seule partie permet d'éviter la présence d'un plan de joint vers le milieu du sol du plancher de la case à veau. Par ailleurs, une seule opération de basculement est suffisante pour basculer le plancher.

Avantageusement, le premier côté latéral du plancher et le bord inférieur de la première paroi latérale présentent des premiers tronçons respectifs de perçages aptes à être disposés dans la continuité les uns des autres pour former un premier canal d'assemblage, tandis que le deuxième côté latéral du plancher et le bord inférieur de la deuxième paroi latérale présentent des deuxièmes tronçons respectifs de perçages aptes à être disposés dans la continuité les uns des autres pour former un deuxième canal d'assemblage, et le dispositif comprend des moyens formant broche d'assemblage, aptes à être insérées dans le premier ou le deuxième canal d'assemblage pour relier le plancher à pivotement par rapport à la paroi latérale correspondante.

Selon que l'on insère les moyens formant broche d'assemblage sur le premier ou le deuxième côté latéral du plancher, on raccorde ce dernier à pivotement avec la première ou avec la deuxième paroi latérale. On choisit donc la disposition la plus pratique en fonction de la configuration des lieux et de l'habileté de l'utilisateur (gaucher ou droitier). Les moyens formant broche d'assemblage présentent l'avantage d'être simples à utiliser et de former simultanément des moyens d'assemblage et l'axe de rotation du plancher par rapport à la paroi. Le côté opposé à cet axe d'articulation peut être laissé libre par rapport à la paroi latérale adjacente, ou bien être relié à cette dernière, par exemple par des moyens formant broche insérés dans le canal d'assemblage formé sur ce côté opposé, et pouvant en être extraits pour faire pivoter le plancher, en particulier lors du nettoyage de la case.

Avantageusement, au moins l'un des éléments parmi le plancher et les parois latérales est en plastique.

Pour ce type d'utilisation, la matière plastique présente l'avantage d'être à la fois relativement peu coûteuse, peu sensible aux dégradations, en particulier par corrosion, et légère.

Avantageusement, les côtés verticaux des parois latérales présentent des tronçons de perçages dans lesquels des broches d'assemblage peuvent être insérées.

Ainsi, les côtés verticaux des parois latérales peuvent être assemblés selon ces broches, disposées verticalement, par exemple lorsque plusieurs cases analogues sont juxtaposées.

Avantageusement, les tronçons de perçages des deux côtés verticaux opposés d'une même paroi latérale sont décalés verticalement.

Ainsi, deux parois latérales peuvent être aisément reliées l'une à l'autre, le côté vertical gauche d'une paroi coopérant naturellement avec le côté vertical droit d'une paroi, du fait du décalage vertical précité.

L'invention sera bien comprise et ses avantages apparaîtront mieux, avec la description détaillée qui suit, d'un mode de réalisation représenté à titre d'exemple non limitatif. La description se réfère aux dessins annexés, sur lesquels :
- la figure 1 est une vue en perspective d'un dispositif de case conforme à l'invention ;
La figure 2 montre, en perspective, un ensemble de quatre dispositifs de case selon l'invention ;
- les figures 3 et 4 sont respectivement des vues agrandies des zones III et IV de la figure 2 ;
- la figure 5 est une vue en coupe prise dans le plan V de la figure 4 ;
- la figure 6 est une vue agrandie de la zone VI de la figure 2 ;
- la figure 7 illustre l'assemblage des pièces situées dans cette zone VI ;
- la figure 8 montre la situation de ces pièces une fois assemblées, en coupe verticale dans le plan VIII-VIII de la figure 2 ;
- les figures 9 et 10 sont des vues agrandies des zones IX et X de la figure 2 ; et
- la figure 11 est une vue en éclaté du dispositif de la figure 1.

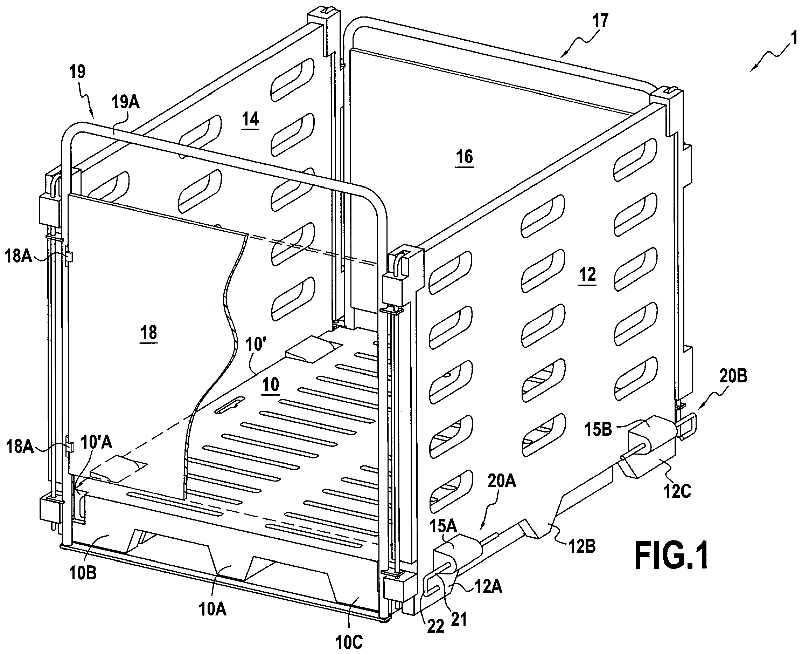

Le dispositif de case 1 pour animaux représenté à la figure 1 est en particulier une case à veaux servant de cellule individuelle pour un veau d'élevage. Ce dispositif comprend un plancher 10, des parois latérales 12 et 14, une paroi de fond 16 et un portillon avant 18, opposé à la paroi de fond.

En l'espèce, le plancher est apte à reposer sur le sol, et l'on voit que sa face inférieure présente des traverses qui servent d'entretoises en contact avec le sol. Il s'agit ici d'une traverse médiane 10A et de deux traverses latérales 10B et 10C, qui peuvent venir d'une pièce avec le plancher, en particulier lorsque celui-ci est en plastique. D'ailleurs, le plancher, comme au moins les parois latérales 12 et 14, étant avantageusement en matière plastique, les traverses présentent en outre l'avantage de rigidifier le plancher.

On voit d'ailleurs que le bord inférieur des parois latérales présente un ou plusieurs pieds localisés, par exemple 12A, 12B et 12C pour la paroi 12, qui reposent sur le sol. Ainsi, le bord inférieur en question à légère distance du sol entre ces pieds, ce qui permet de former des passages pour les déchets et salissures évacués lors du nettoyage de la case.

En l'espèce, ainsi qu'on le verra en détails dans la suite, les parois latérales 12 et 14 sont chacune en une seule pièce, de même que le plancher 10. En revanche, la paroi de fond comprend une plaque 16 fixée en travers d'un cadre 17. Par exemple, le cadre est formé de tubes métalliques, tandis que la plaque est en métal ou en plastique. Le portillon comprend une plaque 18 montée pivotante dans un cadre 19, qui peut également être formé de tubes métalliques. Comme on le verra dans la suite, les parois latérales sont fixées aux cadres 17 et 19. La traverse supérieure 19A du cadre 19 est adaptée en hauteur à la taille des animaux (par exemple des veaux) auquel est destiné le dispositif de case.

La plaque 18 du portillon avant est montée pivotante sur le cadre 19, par des charnières 18A et peut être retenue en position fermée par un système de retenue non représenté.

En l'espèce, les parois latérales 12 et 14, de même que le plancher, sont ajourés. Le plancher se présente ainsi sous la forme d'un caillebottis.

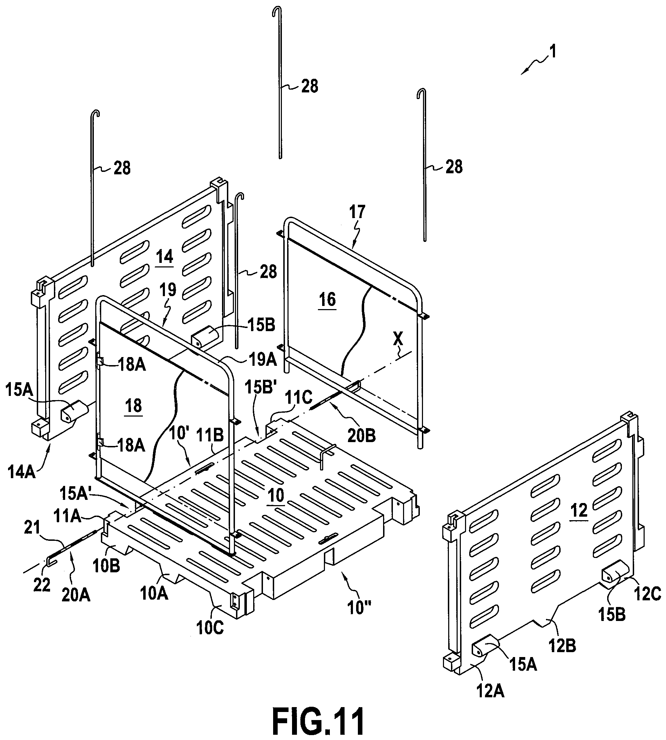

Le plancher 10 est monté pivotant sur la paroi latérale 14. En se reportant également à la figure 11, on voit que le côté 10' du plancher adjacent à la paroi 14 présente des tronçons de perçages 11A, 11B et 11C, et que le bord inférieur 14A de la paroi 14 présente également des tronçons de perçages 15A et 15B.

Plus précisément, le bord inférieur 14A de la paroi latérale 14 présente, sur sa face tournée vers l'intérieur du dispositif de case 1, deux fourreaux 15A et 15B formant des reliefs en saillie vers l'intérieur du dispositif de case 1. Ces fourreaux, percés de part en part, forment chacun un tronçon de perçage de la paroi latérale 14. Sur le côté 10' du plancher 10, les tronçons de perçages 11A et 11B d'une part, et 11B et 11C d'autre part, sont séparés par des encoches, respectivement 15A' et 15B'. Lorsque le fourreau 15A est inséré dans l'encoche 15A', les tronçons de perçages des régions correspondantes du plancher et de la paroi latérale 14 forment un canal d'assemblage dans lequel une broche 20A peut être engagée. Dans cette situation, le fourreau 15B est quant à lui engagé dans l'encoche 15B' et les tronçons de perçages des régions correspondantes du plancher et de la paroi latérale 14 forment un canal d'assemblage dans lequel une broche 20B peut être engagée. Dans l'exemple représenté, on a choisi d'utiliser deux broches 20A et 20B, respectivement engagées par les bords avant et arrière du plancher 10, sur lesquels les canaux d'assemblage débouchent respectivement. Les canaux d'assemblage alignés (formant un canal commun car tous les perçages sont traversants) matérialisent l'axe de pivotement X du plancher (voir figure 11). On peut bien entendu choisir de n'utiliser qu'une seule broche, engagée à partir du bord avant ou du bord arrière dans un canal d'assemblage unique s'étendant à partir du bord en question, sensiblement jusqu'au bord opposé.

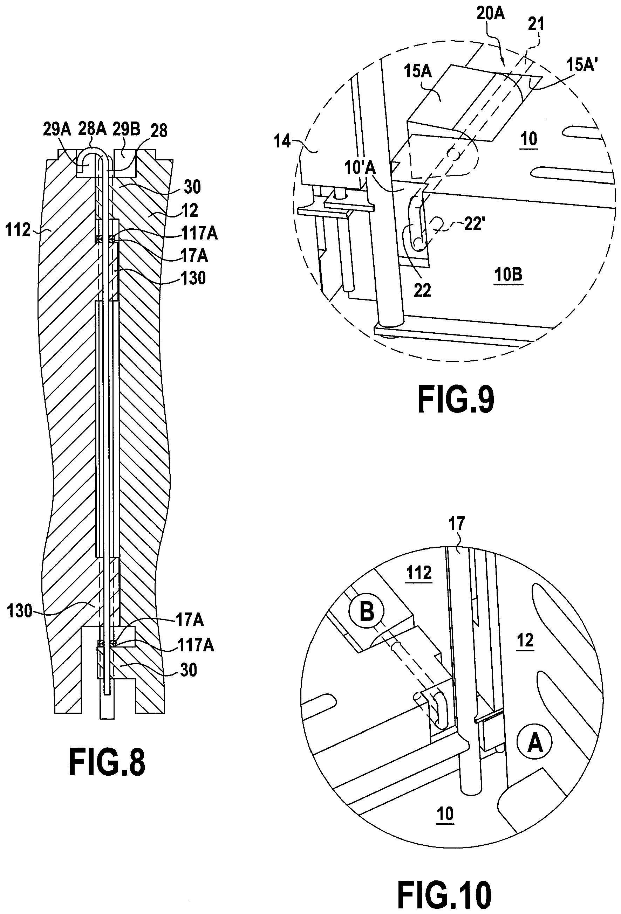

En l'espèce, les broches 20A et 20B sont identiques et présentent chacune une tige 21 et une tête recourbée 22. Comme on le voit mieux sur la figure 9, lorsque que la tige est insérée dans le canal d'assemblage, la tête 22 se loge dans un renfoncement 10'A du bord avant ou arrière du plancher et son extrémité libre 22' vient même s'insérer dans un perçage secondaire du plancher. Les broches 20A et 20B sont ainsi calées et ne forment pas de partie saillante, tout en pouvant être extraites des canaux d'assemblage si nécessaire. Pour éviter cependant leur extraction intempestive, les broches ont leurs têtes en regard des montants verticaux des cadres 17 et 19, lorsque le dispositif de case est monté, de sorte qu'il faut séparer les cadres des parois latérales pour pouvoir démonter le plancher.

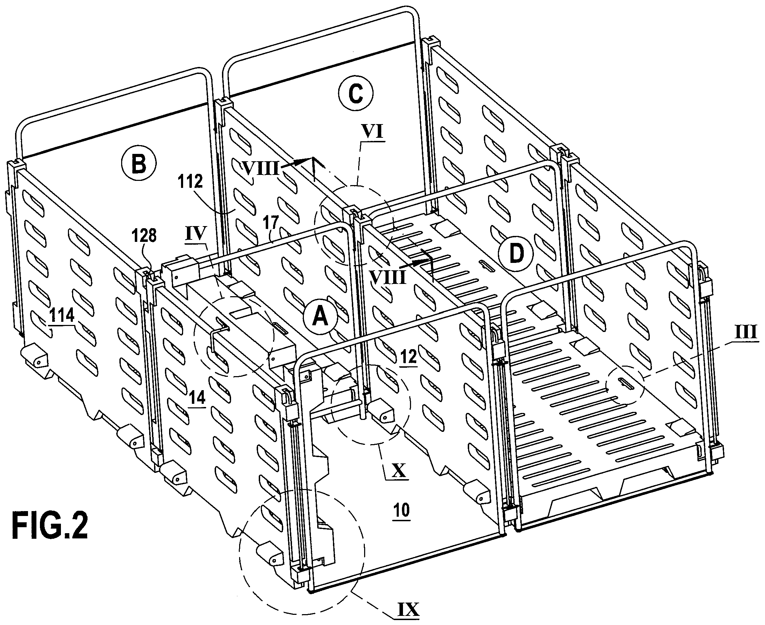

En se référant aux figures 2 et 10, on comprend que des broches analogues servent à relier le plancher 10 de la case B adjacente à la case A, à la paroi latérale commune aux cases B et C. De même, la tête de la broche située du côté du fond de la case, peut être en regard du montant correspondant du cadre de fond 17.

Dans l'exemple représenté, le plancher n'est relié à une paroi latérale que sur l'un de ses côtés, l'autre côté reposant librement contre la face interne de l'autre paroi latérale. On pourrait prévoir de solidariser également l'autre côté du plancher à l'autre paroi latérale en question par un système de broche et de perçages du type précédemment décrit, mais en prenant alors la précaution de faire en sorte que, sur au moins l'un des côtés du plancher, la ou les broches puissent être extraites des perçages alors que les cadres sont montés, pour permettre le pivotement du plancher.

La figure 2 montre un ensemble de quatre dispositifs de cases pour animaux, montés ensemble pour former quatre cases ou cellules. Les cases A et B sont dos à dos, leurs parois de fond étant formées par une paroi commune. Il en va de même pour les cases C et D. De plus, les cases B et C d'une part et A et B d'autre part sont adjacentes et ont respectivement une paroi latérale commune. La constitution de chacune des cases de la figure 2 est analogue à celle qui vient d'être décrite.

On relève que, dans l'exemple représenté, les faces interne et externe des parois latérales sont identiques. Ainsi, les fourreaux 15A et 15B précédemment cités en référence à la paroi latérale 14 équipent en fait les faces interne et externe de cette paroi. De plus, la paroi latérale 12 est identique à la paroi latérale 14. On a d'ailleurs représenté sur la figure 1 les fourreaux 15A et 15B formés sur face de la paroi 12 qui est extérieure à la case de la figure 1 et intérieure à la case D de la figure 2 si l'on considère que la case de la figure 1 est la case A.

De même, les premier et deuxième côtés latéraux 10' et 10" du plancher 10 sont identiques, de sorte qu'un premier et un deuxième canal latéral sont respectivement formés sur les deux côtés 10' et 10" du plancher. Ainsi, le montage de la case est simple puisqu'il n'est pas nécessaire de prendre garde à l'orientation du plancher et des parois latérales, et le plancher peut, à volonté, être monté pivotant à gauche ou à droite à l'aide des broches 20A et 20B qui insérées dans l'un ou l'autre des canaux latéraux.

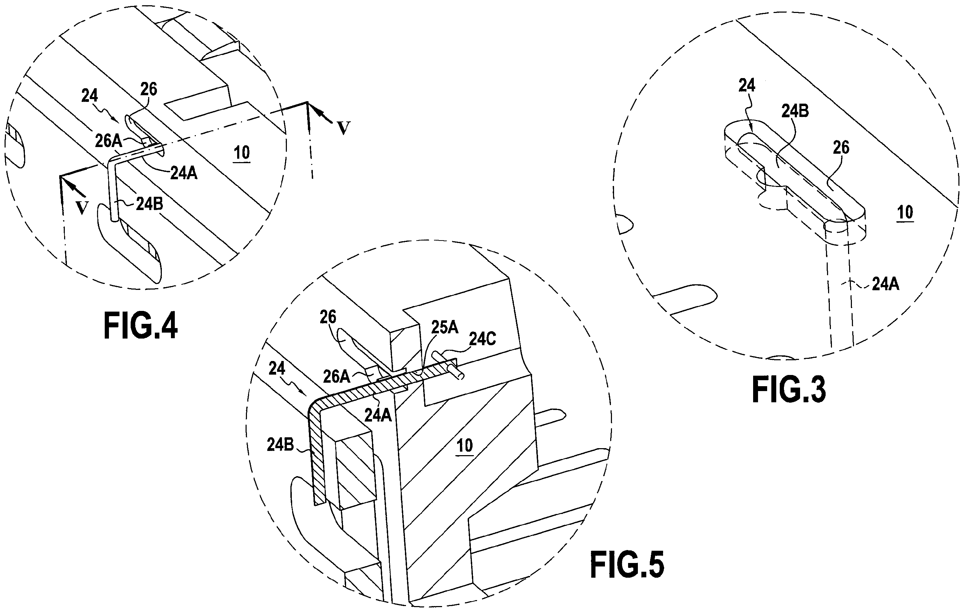

Sur la figure 2, le plancher 10 de la case A est relevé contre la face interne de la paroi latérale 14. Il est maintenu dans cette position par un verrou 24 que l'on décrit maintenant en référence aux figures 3 à 5.

Il s'agit d'un verrou escamotable qui prend la forme d'une tige pliée à angle droit selon deux tronçons 24A et 24B perpendiculaires. Le tronçon 24A est disposé dans un perçage 25A du plancher 10 dans lequel il peut coulisser. La face supérieure du plancher présente un renfoncement 26 qui forme un logement pour le tronçon 24B lorsque le verrou est escamoté. Ainsi, lorsque le plancher est dans sa position horizontale, montrée sur la figure 3, le tronçon 24A est rentré vers le bas dans le perçage 25A et le tronçon 24B est reçu dans le logement 26 sans être en saillie sur la face supérieure du plancher. L'extraction du verrou 24 hors du perçage 25A est empêchée par une goupille ou analogue 24C que présente la queue du tronçon 24A. Comme on le voit sur les figures 4 et 5, pour retenir le plancher 10 en position rabattue contre la paroi 14, le verrou 24 est sorti du logement et pivoté d'un quart de tour pour que son tronçon 24B soit retenu contre la face externe de la paroi 14. Le logement 26 présente une encoche 26A facilitant la préhension du tronçon 24B du verrou pour son extraction hors de ce logement.

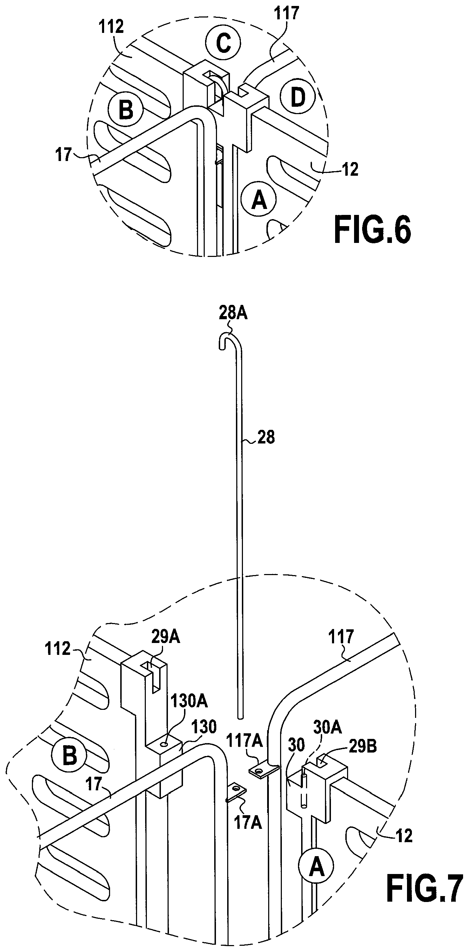

On décrit maintenant les figures 6 et 7, qui montrent la zone de jonction entre les cases A, B, C et D de la figure 2. Dans un souci de clarté de la description, les parois latérales des cases A et D d'une part, et B et C d'autre part, qui se trouvent dans cette zone de jonction, sont respectivement désignées par les références 12 et 112 bien qu'elles soient identiques. Pour la même raison, les cadres des parois de fond communes aux cases A et B d'une part, et C et D d'autre part, sont désignés par les références 17 et 117 bien qu'ils soient identiques. En fait, les deux parois latérales 12 et 112 sont assemblées entre elles et avec les deux cadres 17 et 117 par une simple broche d'assemblage 28.

Les côtés verticaux des parois 12 et 112 présentent en effet des tronçons de perçage 30A et 130A, respectivement, formés dans des portions de manchons 30 et 130 respectivement en saillie sur ces côtés. Ces portions de manchons sont décalées verticalement.

En fait, les parois 12 et 112 sont identiques (et sont également identiques aux parois 14 et 114) et l'on comprend que, pour chacune de ces parois, un premier côté vertical présente les manchons 30 (par exemple deux manchons situés respectivement vers les extrémités haute et basse), tandis que l'autre côté vertical présente les manchons 130, par exemple deux manchons destinés, en situation assemblée, à se trouver entre les tronçons 30.

De même, les côtés des deux cadres 17 et 117 présentent des platines percées 17A, respectivement 117A, qui sont légèrement décalées verticalement.

Par exemple, en situation assemblée visible sur la figure 8, dans laquelle les perçages des platines et des manchons sont alignés, les deux platines 17A et 117A se placent l'une contre l'autre et entre les manchons respectifs 30 et 130. Ceci est valable aussi bien pour la région haute que pour la région basse. La broche d'assemblage 28 peut alors être engagée dans les perçages alignés et relie ensemble les deux parois latérales 12 et 112 et les deux cadres 17 et 117 (et donc les deux fonds respectivement portés par ces cadres).

L'extrémité supérieure 28A de la broche d'assemblage 28 est recourbée pour faciliter sa préhension et, en situation assemblée, elle se loge dans un renfoncement 29A ou 29B de la paroi latérale 12 ou 112.

En se reportant à la figure 2, on comprend que, grâce à cette configuration, les premières parois latérales 12 et 112 (identiques) des cases A et B sont reliées entre elles par une première broche d'assemblage 28, et que les deuxièmes parois latérales 14 et 114 (identiques) de ces cases A et B sont reliées entre elles par une deuxième broche d'assemblage 128. En d'autres termes, les premières et deuxièmes parois latérales des deux cases A et B sont aptes à être respectivement reliées par une première broche d'assemblage 28 commune auxdites premières parois et insérée dans des tronçons de perçage alignés desdites premières parois, et par une deuxième broche d'assemblage 128 commune auxdites deuxièmes parois et inséré dans des tronçons de perçage alignés desdites deuxièmes parois. De plus, le cadre 17 commun aux fonds des cases A et B est également relié à ces parois latérales par ces broches. En effet, les deux montants verticaux de ce cadre sont respectivement équipés des platines percées 17A et 117A qui viennent d'être décrites et qui, en situation assemblée, viennent se placer dans la continuité des tronçons de perçages respectifs pour être traversés par les broches 28 et 128, respectivement.

## Revendications

1. Dispositif de case pour animaux, tel qu'une case à veaux, comprenant un plancher (10), des parois latérales opposées (12, 14), une paroi de fond (16) et un portillon avant (18), lesdites parois et ledit portillon s'étendant vers le haut à partir du plancher,
**caractérisé en ce que** le plancher (10) est monté pivotant sur au moins l'une des parois (14), de manière à pouvoir être rabattu contre cette paroi, à l'intérieur du dispositif,
**en ce qu'**un côté (10') du plancher (10) et le bord inférieur (14A) de la paroi (14) par rapport à laquelle le plancher est articulé présentent des tronçons respectifs de perçages (11A, 11B, 11C ; 15A, 15B) aptes à être disposés dans la continuité les uns des autres pour former un canal d'assemblage commun,
**en ce que** le dispositif comprend des moyens formant broche d'assemblage (20A, 20B), aptes à être insérés dans le canal d'assemblage pour assembler le plancher et ladite paroi, tout en permettant le pivotement du plancher par rapport à ladite paroi, lesdits moyens formant broche comprenant deux broches (20A, 20B) respectivement engagées dans le canal d'assemblage par les bords avant et arrière du plancher,
**en ce que** les broches présentent une tige (21) et une tête recourbée (22), la tête étant logée dans un renfoncement (10'A) du bord avant ou arrière du plancher et son extrémité libre étant insérée dans un perçage secondaire du plancher,
**en ce que** la paroi de fond (16) comprend une plaque fixée en travers d'un cadre (17) et le portillon avant (18) comprend une plaque montée pivotante dans un cadre (19), et
**en ce que** les broches ont leurs têtes (22) situées en regard des montants verticaux des cadres (17, 19).

2. Dispositif selon la revendication 1, **caractérisé en ce que** le bord inférieur (14A) de la paroi (14) par rapport à laquelle le plancher (10) est articulé présente, sur au moins l'une de ses faces, au moins un fourreau en relief (15A, 15B) formant un tronçon de perçage apte à être inséré dans une encoche (15A', 15B') du côté (10') du plancher (10) dans laquelle débouche un tronçon de perçage (11A, 11B, 11C) dudit plancher.

3. Dispositif selon la revendication 1 ou 2, **caractérisé en ce qu'**il comporte des moyens (24) pour maintenir le plancher (10) rabattu contre la paroi (14) sur laquelle il est monté pivotant.

4. Dispositif selon la revendication 3, **caractérisé en ce que** l'un des éléments constitués par le plancher (10) et par la paroi (14) sur laquelle le plancher est monté pivotant porte un verrou (24) escamotable dans un logement, ledit verrou étant apte à être dégagé de son logement tout en étant retenu par rapport audit élément qui le porte, pour coopérer avec l'autre desdits éléments lorsque le plancher est rabattu contre la paroi.

5. Dispositif selon l'une quelconque des revendications 1 à 4, **caractérisé en ce que** les deux bords du plancher (10) parallèles à l'axe de pivotement (X) dudit plancher sont analogues.

6. Dispositif selon l'une quelconque des revendications 1 à 5, **caractérisé en ce que** le plancher (10) est relié par son premier côté latéral (10') à la première paroi latérale (14) de manière à pouvoir pivoter d'un seul tenant par rapport à elle.

7. Dispositif selon l'une quelconque des revendications 1 à 6, **caractérisé en ce que** le premier côté latéral (10') du plancher (10) et le bord inférieur de la première paroi latérale (14) présentent des premiers tronçons respectifs de perçages (11A, 11B, 11C ; 15A, 15B) aptes à être disposés dans la continuité les uns des autres pour former un premier canal d'assemblage, **en ce que** le deuxième côté latéral (10") du plancher et le bord inférieur de la deuxième paroi latérale (12) présentent des deuxièmes tronçons respectifs de perçages aptes à être disposés dans la continuité les uns des autres pour former un deuxième canal d'assemblage, **en ce que** le dispositif comprend des moyens formant broche d'assemblage (20A, 20B), aptes à être insérées dans le premier ou le deuxième canal d'assemblage pour relier le plancher à pivotement par rapport à la paroi latérale correspondante.

8. Dispositif selon l'une quelconque des revendications 1 à 7, **caractérisé en ce qu'**au moins l'un des éléments parmi le plancher (10) et les parois latérales (12, 14) est en plastique.

9. Dispositif selon l'une quelconque des revendications 1 à 8, **caractérisé en ce que** les côtés verticaux des parois latérales (12, 112) présentent des tronçons de perçages (30A, 130A) dans lesquels des broches d'assemblage (30) peuvent être insérées.

10. Dispositif selon la revendication 9, **caractérisé en ce que** les tronçons de perçages (30A, 130A) des deux côtés verticaux opposés d'une même paroi latérale (12, 14, 112) sont décalés verticalement.

11. Ensemble d'au moins deux dispositifs selon l'une quelconque des revendications 9 et 10, **caractérisé en ce que** les premières et deuxièmes parois latérales (12, 14) des deux dispositifs (A, B) sont aptes à être respectivement reliées par une première broche d'assemblage (28) commune auxdites premières parois (12, 112) et insérée dans des tronçons de perçage (30A, 130A) alignés desdites premières parois, et par une deuxième broche d'assemblage commune auxdites deuxièmes parois et inséré dans des tronçons de perçage (30A, 130A) alignés desdites deuxièmes parois.

## Patentansprüche

1. Vorrichtung zur Boxenhaltung von Tieren, wie zum Beispiel eine Kälberbox, umfassend einen Boden (10), einander gegenüberliegende Seitenwände (12, 14), eine Rückwand (16) und ein vorderes Gatter (18), wobei sich die Wände und das Gatter von dem Boden weg nach oben erstrecken,
**dadurch gekennzeichnet,**
**dass** der Boden (10) schwenkbar an zumindest einer der Wände (14) auf solche Weise montiert ist, dass er zum Inneren der Vorrichtung gegen diese Wand umgeklappt werden kann,
**dass** eine Seite (10') des Bodens (10) und der untere Rand (14A) der Wand (14), in Bezug auf welche der Boden angelenkt ist, jeweilige gelochte Teilstücke (11A, 11B, 11C; 15A, 15B) aufweisen, die dazu geeignet sind, durchgehend in Bezug aufeinander angeordnet zu werden, um einen gemeinsamen Montagekanal zu bilden,
**dass** die Vorrichtung Mittel umfasst, die Montagezapfen (20A, 20B) bilden, die dazu geeignet sind, in den Montagekanal eingeführt zu werden, um den Boden und die Wand zusammenzubauen, wobei sie das Schwenken des Bodens in Bezug auf die Wand erlauben, wobei die Mittel, die Zapfen bilden, zwei Zapfen (20A, 20B) umfassen, die jeweils mit dem Montagekanal durch den vorderen und hinteren Rand des Bodens in Eingriff stehen,
**dass** die Zapfen einen Schaft (21) und einen gewölbten Kopf (22) aufweisen, wobei der Kopf in einer Aussparung (10'A) des vorderen oder hinteren Rands des Bodens aufgenommen ist und sein freies Ende in ein zusätzliches Loch des Bodens eingeführt ist,
**dass** die Rückwand (16) eine quer an einem Rahmen (17) befestigte Platte umfasst und das vordere Gatter (18) eine in einem Rahmen (19) schwenkbar montierte Platte umfasst, und
**dass** die Zapfen ihre Köpfe (22) zu den vertikalen Pfosten der Rahmen (17, 19) weisend angeordnet haben.

2. Vorrichtung nach Anspruch 1, **dadurch gekennzeichnet, dass** der untere Rand (14A) der Wand (14), in Bezug auf welche der Boden (10) angelenkt ist, auf zumindest einer seiner Seiten zumindest ein erhöhtes Gleitstück (15A, 15B) aufweist, das ein gelochtes Teilstück bildet, das dazu geeignet ist, in eine Kerbe (15A', 15B') der Seite (10') des Bodens (10) eingeführt zu werden, in welche ein gelochtes Teilstück (11A, 11B, 11C) des Bodens ausmündet.

3. Vorrichtung nach Anspruch 1 oder 2, **dadurch gekennzeichnet, dass** sie Mittel (24) umfasst, um den Boden (10) gegen die Wand (14), an welcher er schwenkbar montiert ist, umgeklappt zu halten.

4. Vorrichtung nach Anspruch 3, **dadurch gekennzeichnet, dass** eines der Elemente, die durch den Boden (10) und durch die Wand (14), an welcher der Boden schwenkbar montiert ist, gebildet werden, einen in eine Aufnahme zurückziehbaren Riegel (24) trägt, wobei der Riegel dazu geeignet ist, aus seiner Aufnahme herausgezogen zu werden, während er in Bezug auf das Element, das ihn trägt, gehalten wird, um mit dem anderen der Elemente zusammenzuwirken, wenn der Boden gegen die Wand umgeklappt wird.

5. Vorrichtung nach einem der Ansprüche 1 bis 4, **dadurch gekennzeichnet, dass** die zwei Ränder des Bodens (10), die parallel zu der Schwenkachse (X) des Bodens sind, analog sind.

6. Vorrichtung nach einem der Ansprüche 1 bis 5, **dadurch gekennzeichnet, dass** der Boden (10) durch seine erste seitliche Seite (10') mit der ersten Seitenwand (14) auf solche Weise verbunden ist, dass er in einem Stück in Bezug auf diese schwenken kann.

7. Vorrichtung nach einem der Ansprüche 1 bis 6, **dadurch gekennzeichnet, dass** die erste seitliche Seite (10') des Bodens (10) und der untere Rand der ersten Seitenwand (14) jeweilige erste gelochte Teilstücke (11A, 11B, 11C; 15A, 15B) aufweisen, die dazu geeignet sind, durchgehend in Bezug aufeinander angeordnet zu werden, um einen ersten Montagekanal zu bilden, dass die zweite seitliche Seite (10") des Bodens und der untere Rand der zweiten Seitenwand (12) jeweilige zweite gelochte Teilstücke aufweisen, die dazu geeignet sind, durchgehend in Bezug aufeinander angeordnet zu werden, um einen zweiten Montagekanal zu bilden, und dass die Vorrichtung Mittel umfasst, die Montagezapfen (20A, 20B) bilden, die dazu geeignet sind, in den ersten oder den zweiten Montagekanal eingeführt zu werden, um den Boden schwenkbar in Bezug auf die entsprechende Seitenwand zu verbinden.

8. Vorrichtung nach einem der Ansprüche 1 bis 7, **dadurch gekennzeichnet, dass** zumindest eines der Elemente von dem Boden (10) und den Seitenwänden (12, 14) aus Kunststoff besteht.

9. Vorrichtung nach einem der Ansprüche 1 bis 8, **dadurch gekennzeichnet, dass** die vertikalen Seiten der Seitenwände (12, 112) gelochte Teilstücke (30A, 130A) aufweisen, in welche die Montagezapfen (30) eingeführt werden können.

10. Vorrichtung nach Anspruch 9, **dadurch gekennzeichnet, dass** die gelochten Teilstücke (30A, 130A) der zwei gegenüberliegenden vertikalen Seiten derselben Seitenwand (12, 14, 112) vertikal versetzt sind.

11. Anordnung aus zumindest zwei Vorrichtungen nach einem der Ansprüche 9 und 10, **dadurch gekennzeichnet, dass** die ersten und zweiten Seitenwände (12, 14) der beiden Vorrichtungen (A, B) dazu geeignet sind, jeweils durch einen ersten Montagezapfen (28), der den ersten Wänden (12, 112) gemeinsam ist und in die ausgerichteten gelochten Teilstücke (30A, 130A) der ersten Wände eingeführt ist, und durch einen zweiten Montagezapfen, der den zweiten Wänden gemeinsam ist und in die ausgerichteten gelochten Teilstücke (30A, 130A) der zweiten Wände eingeführt ist, verbunden zu werden.

## Claims

1. An animal box device, such as a calf box, comprising a floor (10), opposite lateral walls (12, 14), a bottom wall (16) and a front gate (18), said walls and said gate extending upwardly from the floor,
**characterized in that** the floor (10) is pivotally mounted on at least one of the walls (14), so that it can be folded against this wall, inside the device,
**in that** one side (10') of the floor (10) and the lower edge (14A) of the wall (14) relative to which the floor is hinged have respective hole sections (11A, 11B, 11C; 15A, 15B) able to be disposed in the continuation of each other to form a common assembly channel,
**in that** the device comprises means forming an assembly pin (20A, 20B), able to be inserted into the assembly channel to assemble the floor and said wall, while allowing the pivoting of the floor relative to said wall, said means forming the pin comprising two pins (20A, 20B) respectively engaged in the assembly channel by the front and rear edges of the floor,
**in that** the pins have a rod (21) and a curved head (22), the head being housed in a recess (10'A) of the front or rear edge of the floor and its free end being inserted into a secondary hole of the floor,
**in that** the bottom wall (16) comprises a plate fixed across a frame (17) and the front gate (18) comprises a plate pivotally mounted in a frame (19), and
**in that** the pins have their heads (22) located facing the vertical uprights of the frames (17, 19).

2. The device according to claim 1, **characterized in that** the lower edge (14A) of the wall (14) relative to which the floor (10) is hinged has, on at least one of its faces, at least one relief sheath (15A, 15B) forming a hole section able to be inserted into a notch (15A', 15B') on the side (10') of the floor (10) in which a hole section (11A, 11B, 11C) of said floor opens.

3. The device according to claim 1 or 2, **characterized in that** it includes means (24) for holding the floor (10) folded against the wall (14) on which it is pivotally mounted.

4. The device according to claim 3, **characterized in that** one of the elements constituted by the floor (10) and by the wall (14) on which the floor is pivotally mounted carries a retractable lock (24) in a housing, said lock being able to be released from its housing while being retained relative to said element that carries it, to cooperate with the other of said elements when the floor is folded against the wall.

5. The device according to any one of claims 1 to 4, **characterized in that** the two edges of the floor (10) parallel to the pivot axis (X) of said floor are similar.

6. The device according to any one of claims 1 to 5, **characterized in that** the floor (10) is connected by its first lateral side (10') to the first lateral wall (14) so that it can pivot in one piece relative thereto.

7. The device according to any one of claims 1 to 6, **characterized in that** the first lateral side (10') of the floor (10) and the lower edge of the first lateral wall (14) have respective first hole sections (11A, 11B, 11C; 15A, 15B) able to be disposed in the continuation of each other to form a first assembly channel, **in that** the second lateral side (10") of the floor and the lower edge of the second lateral wall (12) have respective second hole sections able to be disposed in the continuation of each other to form a second assembly channel, **in that** the device comprises means forming an assembly pin (20A, 20B), able to be inserted into the first or the second assembly channel to connect the pivot floor relative to the corresponding lateral wall.

8. The device according to any one of claims 1 to 7, **characterized in that** at least one of the elements among the floor (10) and the lateral walls (12, 14) is made of plastic.

9. The device according to any one of claims 1 to 8, **characterized in that** the vertical sides of the lateral walls (12, 112) have hole sections (30A, 130A) in which assembly pins (30) can be inserted.

10. The device according to claim 9, **characterized in that** the hole sections (30A, 130A) of the two opposite vertical sides of a same lateral wall (12, 14, 112) are vertically offset.

11. A set of at least two devices according to any one claims 9 and 10, **characterized in that** the first and second lateral walls (12, 14) of the two devices (A, B) are able to be respectively connected by a first assembly pin (28) common to said first walls (12, 112) and inserted into aligned hole sections (30A, 130A) of said first walls, and by a second assembly pin common to said second walls and inserted into aligned hole sections (30A, 130A) of said second walls.
